# EUROPÄISCHE PATENTANMELDUNG

(11) **EP 2 127 949 A1**
(43) Veröffentlichungstag der Anmeldung: **02.12.2009**
(21) Anmeldenummer: 09005908.0
(22) Anmeldetag: 29.04.2009
(51) Int. Cl.: B60R 1/00

(54) **Vorrichtung zur Vergrösserung des Sehfeldes**

(30) Priorität: 30.05.2008 DE 102008026056
(71) Anmelder: Rheinmetall Landsysteme GmbH, 24107 Kiel (DE)
(72) Erfinder: Hass, Frank, 24235 Wendtorf (DE); Thomson, Jens, 24211 Pohnsdorf (DE); Witt, Tino, 24146 Kiel (DE); Wende, Wolfram, 24536 Neumünster (DE)
(74) Vertreter: Dietrich, Barbara

(57) **Zusammenfassung**

Um eine Vergrößerung des Sehfeldes des Fahrers (8) eines Kraftfahrzeuges (1) mit zwei vorderseitig das Sehfeld begrenzenden A-Säulen (5, 6) zu erreichen, wobei sich der Fahrer (8) nicht immer wieder räumlich neu orientieren muss, schlägt die Erfindung vor, jeder der beiden A-Säulen (5, 6) ein eigenes Kamera-Monitor-System (9, 10) zuzuordnen, wobei die jeweilige Kamera (11, 12) außenseitig an der entsprechenden A-Säule (5, 6) des Kraftfahrzeuges (1) und der dieser Kamera (11, 12) zugeordnete Monitor (13, 14) innenseitig an dieser A-Säule (5, 6) befestigt sind, derart, dass die ohne die Kamera-Monitor-Systeme (9, 10) durch die A-Säulen (5, 6) des Kraftfahrzeuges (1) ausgeblendeten äußeren Sehfeldbereiche (15, 16) für den Fahrer (8) des Kraftfahrzeuges (1) auf den Monitoren (13, 14) darstellbar sind.

## Beschreibung

Die Erfindung betrifft eine Vorrichtung zur Vergrößerung des Sehfeldes eines in einem Kraftfahrzeug befindlichen Fahrers, wobei das Kraftfahrzeug vorderseitig das Sehfeld begrenzende A-Säulen aufweist.

Um insbesondere in gepanzerten Kraftfahrzeugen im Einsatz sicher fahren zu können, ist es wünschenswert, dem Fahrer eine gute Rundumsicht, ebenso wie die Möglichkeit der Nahfeldbeobachtung, zu ermöglichen. Dem steht indessen entgegen, dass die hohen Schutzanforderungen an derartige Kraftfahrzeuge möglichst kleine Scheiben erfordern, die aufgrund der Materialstärke überdies eine eingeschränkte Transparenz aufweisen, so dass das Sehfeld des Fahrers insbesondere durch die vorderseitig angeordneten, relativ breiten A-Säulen des Kraftfahrzeuges stark beschränkt wird.

Zur Kontrolle des hinter einem Kraftfahrzeug befindlichen Bereiches ist es bereits bekannt, Kamera-Monitor-Systeme zu verwenden, bei denen die jeweilige Kamera heckseitig an dem Kraftfahrzeug und der Monitor fahrerseitig angeordnet sind. Als nachteilig hat sich bei der Anordnung derartiger Systeme erwiesen, dass der Fahrer beispielsweise beim Rückwärtseinparken sich erst räumlich orientieren muss, da der Monitor nicht in der Nähe und nicht in Richtung der Kamera angeordnet ist.

Der Erfindung liegt die Aufgabe zugrunde, eine Vorrichtung zur Vergrößerung des Sehfeldes des Fahrers eines Kraftfahrzeuges bei Vorwärtsfahrt anzugeben, wobei sich der Fahrer nicht immer wieder räumlich neu orientieren muss.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, jeder A-Säule ein eigenes Kamera-Monitor-System zuzuordnen, wobei die Kamera des jeweiligen Systems außenseitig an der diesem System zugeordneten A-Säule und der dieser Kamera zugeordnete Monitor innenseitig an der A-Säule des entsprechenden Kraftfahrzeuges befestigt sind, derart, dass die ohne die Kamera-Monitor-Systeme durch die A-Säulen des Kraftfahrzeuges ausgeblendeten Sehfeldbereiche für den Fahrer des Kraftfahrzeuges auf den Monitoren darstellbar sind.

Da bei der erfindungsgemäßen Anordnung der Kamera-Monitor-Systeme sowohl der Monitor als auch die Kamera im Bereich der A-Säulen angebracht sind, muss der Fahrer des entsprechenden Fahrzeuges sich bei Verwendung dieser Systeme nicht räumlich neu orientieren.

Die erfindungsgemäße Vorrichtung weist nicht nur den Vorteil auf, dass sie das Sehfeld des jeweiligen Fahrers vergrößert und damit auch mehr Sicherheit für den Fahrer im Straßenverkehr bietet, sondern bei gepanzerten Kraftfahrzeugen kann auch der ballistische Schutz gegenüber vergleichbaren bekannten Kraftfahrzeugen wesentlich erhöht werden, da die aus Stahl bestehenden A-Säulen breiter gewählt werden können und einen besseren Schutz als Fenster aus Glas oder einem Verbundmaterial bieten.

Weitere Einzelheiten und Vorteile der Erfindung ergeben sich aus dem folgenden, anhand einer Figur erläuterten Ausführungsbeispiel.

In der Fig. ist eine lediglich schematische Draufsicht auf den vorderen Bereich eines gepanzerten Kraftfahrzeuges 1 dargestellt, welches sowohl ein Frontfenster 2 als auch zwei Seitenfenster 3 und 4 besitzt. Zwischen dem Frontfenster 2 und den beiden Seitenfenstern 3, 4 befinden sich jeweils eine A-Säule 5, 6, die das Sehfeld eines im Inneren 7 des Kraftfahrzeuges 1 befindlichen Fahrers 8 einschränkt.

Erfindungsgemäß sind daher zwei Kamera-Monitor-Systeme 9, 10 vorgesehen. Dabei sind die Kameras 11, 12 der beiden Systeme außenseitig jeweils an einer A-Säule 5, 6 des Kraftfahrzeuges 1 befestigt. Die diesen Kameras 11, 12 jeweils zugeordneten Monitore 13, 14 befinden sich im Inneren 7 des Kraftfahrzeuges 1 im Bereich der entsprechenden A-Säulen 5, 6, so dass die durch die A-Säulen 5, 6 des Kraftfahrzeuges 1 ausgeblendeten außenseitigen Sehfeldbereiche 15, 16 für den Fahrer 8 des Kraftfahrzeuges 1 auf den Monitoren 13, 14 darstellbar sind.

### Bezugszeichenliste

- 1: Kraftfahrzeug
- 2: Frontfenster
- 3, 4: Seitenfenster
- 5, 6: A-Säulen
- 7: Innere des Kraftfahrzeuges
- 8: Fahrer
- 9, 10: Kamera-Monitor-Systeme
- 11, 12: Kameras
- 13, 14: Monitore
- 15, 16: Sehfeldbereiche

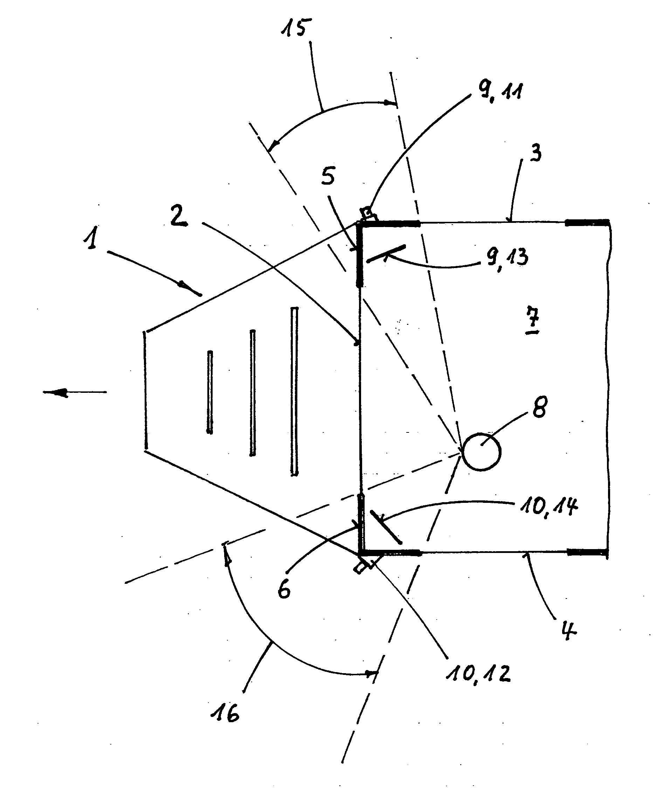

## Patentansprüche

1. Vorrichtung zur Vergrößerung des Sehfeldes eines in einem Kraftfahrzeug (1) befindlichen Fahrers (8), wobei das Kraftfahrzeug (1) vorderseitig das Sehfeld begrenzende A-Säulen (5, 6) aufweist, **dadurch gekennzeichnet, dass** jeder der beiden A-Säulen (5, 6) ein Kamera-Monitor-System (9, 10) zugeordnet ist, wobei die jeweilige Kamera (11, 12) außenseitig an der entsprechenden A-Säule (5, 6) des Kraftfahrzeuges (1) und der dieser Kamera (11, 12) zugeordnete Monitor (13, 14) innenseitig an dieser A-Säule (5, 6) befestigt sind, derart, dass die ohne die Kamera-Monitor-Systeme (9, 10) durch die A-Säulen (5, 6) des Kraftfahrzeuges (1) ausgeblendeten äußeren Sehfeldbereiche (15, 16) für den Fahrer (8) des Kraftfahrzeuges (1) auf den Monitoren (13, 14) darstellbar sind.
